# EUROPÄISCHE PATENTSCHRIFT

(11) **EP 0 889 081 B1**
(45) Veröffentlichungstag und Bekanntmachung des Hinweises auf die Patenterteilung: **27.11.2002**
(21) Anmeldenummer: 98105455.4
(22) Anmeldetag: 26.03.1998
(51) Int. Cl.: C08J 11/06, F16D 69/02

(54) **Verfahren zur Wiederverwendung von bei der Herstellung von Reibbelägen entstehenden Stäuben**
Process for re-using powder produced during the production of friction linings
Procédé de réutilisation de poussières produites lors de la production de garnitures de friction

(30) Priorität: 01.07.1997 DE 19727920
(43) Veröffentlichungstag der Anmeldung: 07.01.1999
(73) Patentinhaber: TMD Friction GmbH, 51381 Leverkusen (DE)
(72) Erfinder: Hogenkamp, Wolfgang, Dipl.-Ing., 42855 Remscheid (DE); Ervens, Ludwig, Dipl.-Ing., 51519 Odenthal (DE)
(74) Vertreter: Dallmeyer, Georg, Dipl.-Ing.

(56) Entgegenhaltungen:
- EP-A- 0 518 004
- EP-A- 0 553 404
- EP-A- 0 826 896
- DATABASE WPI Section Ch, Week 8231 Derwent Publications Ltd., London, GB; Class A88, AN 82-64846E XP002083396 & JP 57 102979 A (HITACHI CHEM CO LTD) , 26. Juni 1982
- DATABASE WPI Section PQ, Week 9431 Derwent Publications Ltd., London, GB; Class Q63, AN 94-254267 XP002083397 & RU 2 005 929 C (TIIR TECH ASBESTOS ARTICLES RES INST), 15. Januar 1994
- DATABASE WPI Section Ch, Week 9511 Derwent Publications Ltd., London, GB; Class A88, AN 95-078255 XP002083398 & JP 07 003250 A (SUMITOMO BAKELITE CO LTD), 6. Januar 1995

## Beschreibung

Die Erfindung betrifft ein Verfahren zur Wiederverwendung von bei der Herstellung von Reibbelägen entstehenden Stäuben durch Absaugen und Sammeln der Filterstäube an verschiedenen Sammelstellen.

Aus der EP 0 553 404 A ist es bekannt, für die Herstellung von Reibbelägen feinteilige Reststoffe aus der Reibbelagproduktion, wie beispielsweise Filterstäube aus der Absaugung der Mischer für die Reibbelagmasse, zusammen mit Preßgrat, Schleifstaub und Bohrklein, unter Zugabe eines Bindemittels wiederzuverwenden und eine Mischung aus diesen Reststoffen zu einem organisch gebundenen Reibbelag zu verpressen. Alle Filterstäube werden über Sammelfilteranlagen zusammengeführt und beispielsweise gemeinsam mit Schleifstaub und Bindemittel zu Reibbelägen verpreßt. Nachteilig ist dabei, daß die aus unterschiedlichen Fertigungsstufen gemischten Filterstäube und Reibbelagfragmente einen ungleichen Anteil von Bindemitteln enthalten, und zwar aktive und inaktive Bindemittel. Da insbesondere der Bindemittelanteil der Filterstaube je nach Fertigungsstufe stark schwankend ist, ist die Wiederverwendbarkeit der Filterstäube sehr eingeschränkt.

Der Erfindung liegt daher die Aufgabe zugrunde, ein Verfahren zur Wiederverwendung von bei der Herstellung von Reibbelägen entstehenden Stäuben anzugeben, mit dem Filterstaubgranulate bzw. Filterstaubagglomerate mit einer hohen Reproduzierbarkeit ihrer Zusammensetzung herstellbar sind.

Zur Lösung dieser Aufgabe dienen die Merkmale des Anspruchs 1 bzw. 4.

Die Erfindung sieht in vorteilhafter Weise vor, daß die gesammelten Filterstäube durch folgende Verfahrensschritte zu einem Filterstaubgranulat aufbereitet werden:

Zunächst werden die Filterstäube nach Fertigungsstufen getrennt gesammelt. Dadurch ist gewährleistet, daß die Zusammensetzung der Filterstäube und insbesondere deren Anteil an aktiven und inaktiven Bindemitteln bekannt ist und daher mit einem reproduzierbaren Anteil dosiert der Mischung von Filterstäuben zugeführt werden kann. Die Filterstäube werden in einem bei der Dosierung vorgewählten, durch den späteren Verwendungszweck definierten Verhältnis untereinander gemischt, wodurch die Zusammensetzung der Filterstäube und deren Anteile an inaktiven und aktiven Bindemitteln reproduzierbar eingestellt werden kann. Damit kommen Stäube mit aktiven Bindemitteln und veränderten Faserbestandteilen mit Stäuben, die keine aktiven Bestandteile mehr enthalten und durch den Fertigbearbeitungsprozeß, wie Fräsen, Schleifen, Bohren u.s.w., eine sehr feine Struktur aufweisen, zusammen. Durch den Mischprozeß können produktionsbedingte Schwankungen der Staubzusammensetzung, insbesondere des Bindemittelanteils, ausgeglichen werden. Da die Filterstäube aus der Vorproduktion von Phenolharzmassen überproportional hohe aktive Bindemittelanteile enthalten, ist es möglich, die gemischten Filterstäube beim Kompaktieren zu einem festen Filterstaubgranulat zu verpressen. Die Wärmebehandlung dient zum Härten des Filterstaubgranulates, indem das Granulat so weit erhitzt wird, daß die Phenolharze/Novolacke ausreagieren.

Alternativ können die gesammelten Filterstäube durch folgende Schritte zu einem Filterstaubagglomerat aufbereitet werden:

Die Filterstäube werden wiederum nach Fertigungsstufen getrennt gesammelt und in einem vorgewählten, durch den späteren Verwendungszweck vorgegebenen Verhältnis zusammen mit Bindemitteln dosiert. Durch die Mischagglomeration der unterschiedlichen Filterstäube und des Bindemittels entstehen Filterstaubagglomerate, die anschließend einer Wärmebehandlung zugeführt werden.

Vor oder nach der Wärmebehandlung kann eine Siebung der Filterstaubgranulate oder Filterstaubagglomerate unter Rückführung des Siebabfalls zu dem Dosier- und Mischschritt erfolgen. Die Filterstaubgranulate bzw. -agglomerate können auch einem Zerkleinerungsprozeß ausgesetzt werden. Die wärmebehandelten und kompaktierten Filterstaubgranulate bzw. die wärmebehandelten Filterstaubagglomerate können zwecks Wiederverwendung einer Reibmaterial-Recycling-Anlage, wie sie in der älteren europäischen Patentanmeldung EP 0 826 896 A entnehmbar ist, zugeführt werden.

Alternativ kann das wärmebehandelte Filterstaubgranulat oder Filterstaubagglomerat als Zuschlagstoff für Reibmaterialmischungen verwendet werden.

Das wärmebehandelte Filterstaubgranulat oder Filterstaubagglomerat kann schließlich auch als Reibmaterialmischung unter Zugabe von Bindemitteln unmittelbar zur Herstellung von Reibbelägen verwendet werden.

Im folgenden werden unter Bezugnahme auf die Zeichnungen Ausführungsbeispiele der Erfindung näher erläutert.

Es zeigen:
- Fig. 1: die Herstellung von kompaktiertem und wärmebehandeltem Filterstaubgranulat,
- Fig. 2: die Herstellung von Filterstaubgranulat durch Brikettieren und Zerkleinern,
- Fig. 3: eine alternative Herstellung von Filterstaubgranulat mit Zerkleinerung nach der Wärmebehandlung,
- Fig. 4: die Herstellung von Filterstaubagglomerat, und
- Fig. 5: die Herstellung von Filterstaubagglomerat mit einem sich an die Wärmebehandlung anschließenden Zerkleinerungsprozeß.

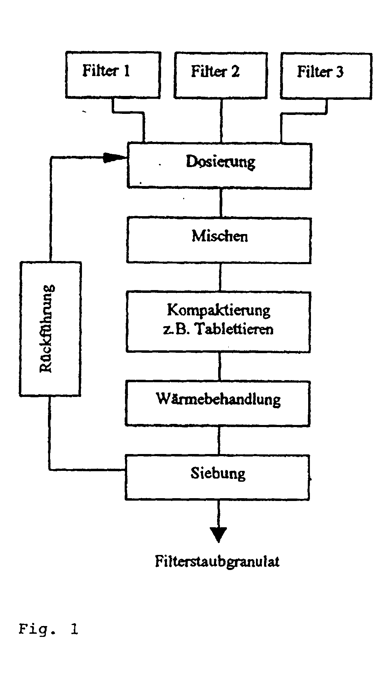

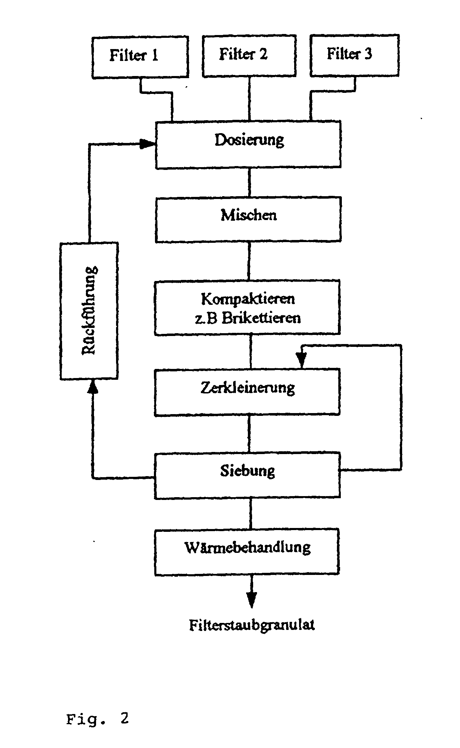

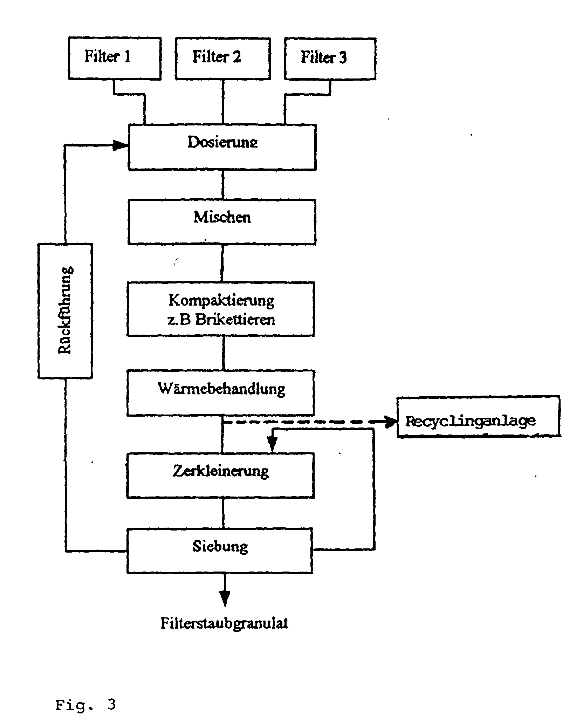

Bei der Herstellung von organisch gebundenen Reibbelägen fallen produktionsbedingt Stäube durch Umfüllen, Dosieren, Schleifen, Bohren u.s.w. an. Diese Stäube werden durch Absaugeinrichtungen an den Produktionsstellen Filteranlagen zugeführt. Die Filterstäube aus den unterschiedlichen Fertigungsstufen werden getrennt gehalten. Je nach späterer Verwendung der aus den Filterstäuben hergestellten Granulate oder Agglomerate stehen somit Filterstäube nach Fertigungsstufen und nach der Art der hergestellten Reibbeläge getrennt für eine Dosierung und Mischung zur Verfügung. Die Filterstäube werden separat für Scheibenbremsbeläge, Trommelbremsbeläge, Schienenfahrzeugbeläge und Industriereibbeläge und dann jeweils noch mal unterteilt nach Fertigungsstufen, z.B. Mischerei, Presserei, Fertigbearbeitung getrennt gesammelt. Die auf diese Weise separat gesammelten Filterstäube zeichnen sich dadurch aus, daß deren Bestandteile jeweils einen bekannten konstanten Anteil aufweisen. Über die Dosierung beim Mischen der unterschiedlichen Filterstäube können daher sehr gut reproduzierbare Filterstaubmischungen hergestellt werden, wobei insbesondere der Bindemittelanteil exakt gesteuert werden kann. Wichtig ist dabei, daß der Anteil aktiver Harze so eingestellt werden kann, daß die Mischung zu einem festen Körper verpreßt werden kann. Wie aus Fig. 1 schematisch hervorgeht, werden Filterstäube aus verschiedenen Fertigungsstufen in einem voreingestellten Verhältnis zueinander dosiert und gemischt, wodurch die Filterstaubmischung homogenisiert werden kann. Anschließend wird mit Hilfe eines mechanischen Formgebungsverfahren der Filterstaub kompaktiert, nämlich beispielsweise tablettiert (Fig. 1) oder brikettiert (Fign. 2 und 3).

Die getrennt gesammelten Filterstäube aus unterschiedlichen Fertigungsstufen werden in einem Mischer gemischt und dadurch homogenisiert. Übliche Mischer in der Reibbelagfertigung sind z.B. Pflugscharmischer in horizontaler oder vertikaler Bauform. Die gesammelten Filterstäube können in Silos bevorratet werden, die ihrerseits Mischkammern oder Mischtrommeln aufweisen, um die Stäube vor Ihrer Dosierung und Mischung zu homogenisieren.

Die auf diese Art homogenisierten Filterstäube werden in einer von dem späteren Verwendungszweck abhängigen Mengenverhältnis dosiert und in einem Mischer vermischt, in dem eine Entstaubung durch Granulieren, Pillieren und/oder Pelletieren erfolgt und in dem ggf. Zuschlagstoffe oder Granulierungsmittel zugegeben werden können. Der Mischer sollte zusätzlich geeignet sein, für einen Agglomerationsschritt auch Flüssigkeiten einzumischen.

Vorzugsweise ist nach dem Mischer eine Pelletier- bzw. Granuliermaschine nachgeschaltet, um Filterstaubgranulate gezielt herstellen zu können.

Als Granulierhilfsmittel sind mit einem Anteil von 1 bis 6 Gew%, vorzugsweise ca. 2,5 Gew%, folgende Stoffe verwendbar:
Natron-Wasserglaslösung
Leimlösung
Kleisterlösung
Flüssigharze
Alkohole wie z.B. Isopropanol
Lösungsmittel
Latex
Triphenylphosphat (TPP, Mesamol) flüssig oder fest
Sonstige, wie: Colophonium, Dextrose, Melasse, Stärkeverbindungen, Gelee, Ton, Zement, Kalk, Gips u.a.,
Wasser, Dampf

Die Granulierhilfsmittel sind allerdings nicht zwingend erforderlich. Bei einem genügend hohen Anteil aktiver Bindemittel in den Filterstäuben ist es auch ohne den Zusatz von Granulierhilfsmittel möglich, Filterstaubgranulate herzustellen.

Es ist auch möglich, beheizte Mischer bzw. Pelletierer einzusetzen, die die in den Filterstaubmischungen vorhanden oder zusätzlich eingebrachten Bindemittel so anzulösen, daß unter Nutzung des Erweichungspunktes der Bindemittel der angestrebte Granuliereffekt erreicht wird. Je nach Temperatur kann auf einen separaten Wärmebehandlungsschritt verzichtet werden.

Als trockene Zuschlagsstoffe können dem Mischprozeß künstliche Mineralfasern, die auch staubbindende Eigenschaften aufweisen, sowie Metalle, pulverförmige Harze u.s.w. zugegeben werden, wenn dies für die spätere Verwendung der Filterstaubgranulate bzw. Agglomerate vorteilhaft erscheint.

Die Filterstaubmischung kann auch auf herkömmlichen Hydraulikpressen mit beheizten oder unbeheizten Preßwerkzeugen zu einem Formkörper wie beispielsweise Schülpen oder Briketts verpreßt werden. Die Schülpen, Tabletten oder Briketts können in einem Ofen bei Temperaturen von ca. 230 °C so temperiert werden, daß die Bindemittelmasse endgültig vernetzt und damit inaktiv wird. Der inaktive Preßling kann beispielsweise einer Recycling-Anlage zugeführt werden oder durch Mahl-/Sieb- und Sichtungsprozesse zu einem inaktiven Filterstaubgranulat verarbeitet werden, das als Zuschlagstoff oder ausschließliche Reibbelagmischung für die Reibbelagherstellung unter Zugabe von Bindemitteln verwendet werden kann.

Bei den Ausführungsbeispielen der Fign. 2 und 3 schließt sich an den Zerkleinerungsprozeß ein Siebprozeß an, in dem eine Filterstaubfraktion mit einer zu kleinen Korngröße zu dem Dosierschritt zurückgeführt wird, während eine Filterstaubgranulatfraktion mit zu großem Korndurchmesser erneut dem Zerkleinerungsschritt zugeführt wird. Die Wärmebehandlung kann gemäß Fig. 2 nach dem Siebprozeß erfolgen oder gemäß Fig. 3 vor dem Zerkleinerungsprozeß.

Während der Wärmebehandlung können auch die eventuell eingesetzten Granulierhilfsmittel zur Reaktion gebracht werden bzw. ausgetrieben werden. Je nach Reaktionsprodukt ist eine Nachbehandlung der entstehenden Gase durch eine Filtration, Wäsche, Nachverbrennung u.s.w. notwendig. Die sich daraus ergebende Energie kann zum Betrieb der Reaktionsstufe genutzt werden. Um das energetische Aushärten der Bindemittel zu vermeiden, kann auch eine kalte Vernetzung mittels entsprechender Katalysatoren eingeleitet werden.

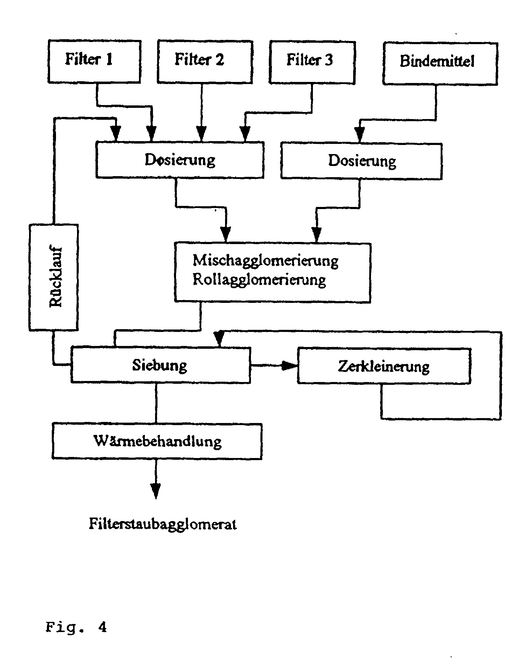

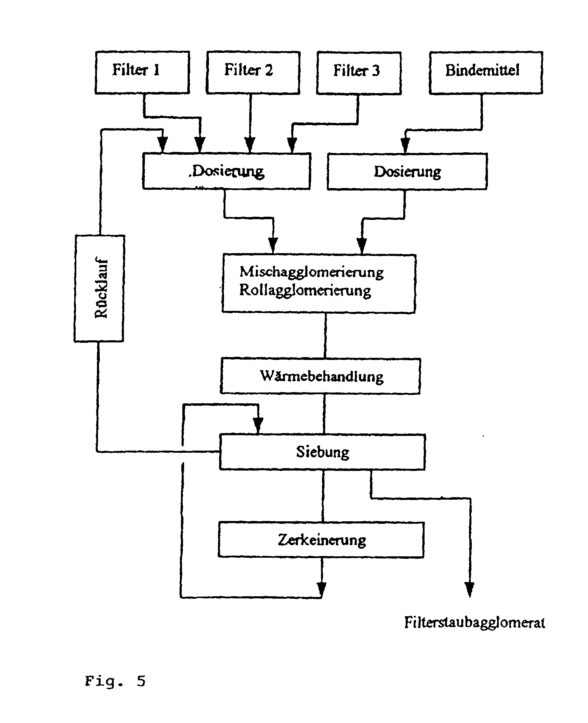

Die Fign. 4 und 5 zeigen schematisch die Herstellung von Filterstaubagglomeraten, die sich im wesentlichen von der Herstellung der Filterstaubgranulate dadurch unterscheidet, daß in dem Dosierschritt zusätzlich Bindemittel dosiert werden. Die Agglomerierung des Filterstaubs erfolgt als Misch- oder Rollagglomerierung. Eine Wärmebehandlung erfolgt entweder gemäß Fig. 4 nach Siebung und Zerkleinerung der Agglomerate oder gemäß Fig. 5 vor der Siebung und Zerkleinerung der Filterstaubagglomerate.

Die Filterstaubgranulate und Filterstaubagglomerate können Zwecks Wiederverwendung einer Reibmaterial-Recyclinganlage, wie Sie in der EP 0 826 896 A beschrieben ist, zugeführt werden. In diesem Fall kann der Zerkleinerungs- und Siebungsprozeß wegfallen, da er ggf. in der Reibmaterial-Recyclinganlage durchgeführt wird.

Das wärmebehandelte Filterstaubgranulat oder Filterstaubagglomerat kann desweiteren als Zuschlagstoff für Reibmaterialmischungen verwendet werden und dort als Rohstoffersatz dienen.

Schließlich kann das wärmebehandelte Filterstaubgranulat oder Filterstaubagglomerat auch als ausschließliche Reibmaterialmischung verwendet werden, der nur noch Bindemittel zur Herstellung von Reibbelägen zugegeben wird.

## Patentansprüche

1. Verfahren zur Wiederverwendung von bei der Herstelltung von Reibbelägen entstehenden Stäuben durch Absaugen und Sammeln der Filterstäube an verschiedenen Sammelstellen,
**dadurch gekennzeichnet,**
**daß** die gesammelten Filterstäube durch folgende Schritte zu einem Filterstaubgranulat aufbereitet werden:
- nach Fertigungsstufen getrenntes Sammeln der Filterstäube,
- Dosieren der aus verschiedenen Fertigungsstufen stammenden Filterstäube in einem vorgewählten Verhältnis,
- Mischen der unterschiedlichen Filterstäube,
- Kompaktieren der gemischten Filterstäube zu einem Filterstaubgranulat, und
- Durchführen einer Wärmebehandlung.

2. Verfahren nach Anspruch 1, **dadurch gekennzeichnet, daß** das Kompaktieren aus einem Brikettierschritt besteht, und daß nach dem Brikettieren eine Zerkleinerung der Filterstaubbriketts zu einem Filterstaubgranulat erfolgt.

3. Verfahren nach Anspruch 2, **dadurch gekennzeichnet, daß** nach der Zerkleinerung der Filterstaubbriketts eine Siebung durchgeführt wird und daß bei der Siebung zu kleine Fragmente der Filterstaubbriketts dem Dosier- oder Mischschritt zugeführt werden, während zu große Fragmente dem Zerkleinerungsschritt zugeführt werden.

4. Verfahren zur Wiederverwendung von bei der Herstelltung von Reibbelägen entstehenden Stäuben durch Absaugen und Sammeln der Filterstäube an verschiedenen Sammelstellen,
**dadurch gekennzeichnet,**
**daß** die gesammelten Filterstäube durch folgende Schritte zu einem Filterstaubagglomerat aufbereitet werden:
- nach Fertigungsstufen getrenntes Sammeln der Filterstäube,
- Dosieren der aus verschiedenen Fertigungsstufen stammenden Filterstäube in einem vorgewählten Verhältnis,
- Dosieren von Bindemitteln,
- Mischagglomarierung der unterschiedlichen Filterstäube und des Bindemittels zu Filterstaubagglomerat, und
- Wärmebehandlung des Filterstaubagglomerats.

5. Verfahren nach einem der Ansprüche 1 bis 4, **dadurch gekennzeichnet, daß** vor oder nach der Wärmebehandlung eine Siebung des Filterstaubgranulates oder Filterstaubagglomerats unter Rückführung des Siebabfalls zu dem Dosier- oder Mischschritt erfolgt.

6. Verfahren nach Anspruch 5, **dadurch gekennzeichnet, daß** nach der Siebung ein Zerkleinerungsschritt erfolgt.

7. Verfahren nach einem der Ansprüche 1 bis 6, **dadurch gekennzeichnet, daß** beim Mischen der Filterstäube Granulierhilfsmittel zugegeben werden.

8. Verfahren nach einem der Ansprüche 1 bis 7, **dadurch gekennzeichnet, daß** beim Mischen der Filterstäube Zuschlagsstoffe zugegeben werden.

9. Verfahren nach einem der Ansprüche 1 bis 8, **dadurch gekennzeichnet, daß** das warmebehandelte kompaktierte Filterstaubgranulat oder Filterstaubagglomerat zur Wiederverwendung einer Reibmaterial-Recyclinganlage zugeführt wird.

10. Verfahren nach einem der Ansprüche 1 bis 8, **dadurch gekennzeichnet, daß** das wärmebehandelte Filterstaubgranulat oder Filterstaubagglomerat als Zuschlagsstoff für Reibmaterialmischungen verwendet wird.

11. Verfahren nach einem der Ansprüche 1 bis 8, **dadurch gekennzeichnet, daß** das wärmebehandelte Filterstaubgranulat oder Filterstaubagglomerat als Reibmaterialmischung unter Zugabe von Bindemitteln zur Herstellung von Reibbelägen verwendet wird.

## Claims

1. Method for reusing dusts produced during the manufacturing offriction linings, by sucking off and collecting the filtered dusts at different sites of collection,
**characterized in**
**that** the collected filtered dusts are processed into a filtered dust granulate by the following steps:
- collecting the filtered dusts, separated by production stages,
- dosing the filtered dusts from different production stages in a preselected ratio,
- mixing the different filtered dusts,
- compacting the mixed filtered dusts to form a filtered dust granulate, and
- performing a heat treatment.

2. The method of claim 1, **characterized in that** the compacting includes a coking step and that after coking, the filtered dust cokes are broken into filtered dust granulate.

3. The method of claim 2, **characterized in that** after the breaking of the filtered dust cokes a sieving is performed and that upon sieving fragments of the filtered dust cokes that are too small are fed to the dosing and mixing step, while fragments that are too big are fed to the breaking step.

4. Method for reusing dusts produced during the manufacturing of friction linings, by sucking off and collecting the filtered dusts at different sites of collection,
**characterized in**
**that** the collected filtered dusts are processed into a filtered dust agglomerate by the following steps:
- collecting the filtered dusts, separated by production stages,
- dosing the filtered dusts from different production stages in a preselected ratio,
- dosing binding agents,
- mixed agglomeration of the mixed filtered dusts and the binding agent to form a filtered dust agglomerate, and
- performing a heat treatment of the filtered dust agglomerate.

5. The method of one of claims 1 to 4, **characterized in that** prior or subsequent to the heat treatment the filtered dust granulate or the filtered dust agglomerate is sieved with the sieving waste being returned to the dosing or mixing step.

6. The method of claim 5, **characterized in that** afterthe sieving a breaking step is performed.

7. The method of one of claims 1 to 6, **characterized in that** granulate forming agents are added when mixing the filtered dusts.

8. The method of one of claims 1 to 7, **characterized in that** additives are added when mixing the filtered dusts.

9. The method of one of claims 1 to 8, **characterized in that** the heat-treated compacted filtered dust granulate or filtered dust agglomerate is fed to a friction material recycling installation for reuse.

10. The method of one of claims 1 to 8, **characterized in that** the heat-treated compacted filtered dust granulate or filtered dust agglomerate is used as an additive for friction material linings.

11. The method of one of claims 1 to 8, **characterized in that** the heat-treated compacted filtered dust granulate or filtered dust agglomerate is used as a friction material mixture with added binding agents forthe manufacture of friction linings.

## Revendications

1. Procédé de réutilisation de poussières engendrées lors de la production de garnitures de friction, par aspiration et collecte des poussières de filtration en divers emplacements de collecte, **caractérisé en ce que** les poussières de filtration collectées sont préparées en granulat de poussière de filtration par les étapes suivantes :
- collecte séparée des poussières de filtration suivant les étapes de la production,
- dosage des poussières de filtration provenant des différentes étapes de la production selon un rapport prédéterminé,
- mélange des différentes poussières de filtration,
- compactage des poussières de filtration mélangées en un granulat de poussière de filtration, et
- exécution d'un traitement thermique.

2. Procédé selon la revendication 1, **caractérisé en ce que** le compactage se compose d'une étape de briquetage, et qu'après le briquetage a lieu une fragmentation des briquettes de poussière de filtration en un granulat de poussière de filtration.

3. Procédé selon la revendication 2, **caractérisé en ce qu'**après la fragmentation des briquettes de poussière de filtration un tamisage est exécuté et que lors du tamisage les fragments trop petits de briquette de poussière de filtration sont amenés à l'étape de dosage ou de mélange, tandis que les fragments trop gros sont amenés à l'étape de fragmentation.

4. Procédé de réutilisation de poussières engendrées lors de la production de garnitures de friction par aspiration et collecte de poussière de filtration en divers emplacements de collecte, **caractérisé en ce que** les poussières de filtration collectées sont préparées en un agglomérat de poussière de filtration par les étapes suivantes :
- collecte séparée des poussières de filtration suivant les étapes de la production,
- dosage des poussières de filtration provenant des diverses étapes de la production selon un rapport prédéterminé,
- dosage de liants,
- agglomération du mélange des différentes poussières de filtration et du liant en un agglomérat de poussière de filtration, et
- traitement thermique de l'agglomérat de poussière de filtration.

5. Procédé selon l'une des revendications 1 à 4, **caractérisé en ce que**, avant ou après le traitement thermique, a lieu un tamisage du granulat de poussière de filtration ou de l'agglomérat de poussière de filtration avec retour des chutes de tamisage à l'étape de dosage ou de mélange.

6. Procédé selon la revendication 5, **caractérisé en ce qu'**une étape de fragmentation a lieu après le tamisage.

7. Procédé selon l'une des revendications 1 à 6, **caractérisé en ce que** des adjuvants de granulation sont ajoutés lors du mélange des poussières de filtration.

8. Procédé selon l'une des revendications 1 à 7, **caractérisé en ce que** des agrégats sont ajoutés lors du mélange des poussières de filtration.

9. Procédé selon l'une des revendications 1 à 8, **caractérisé en ce que** le granulat de poussière de filtration ou l'agglomérat de poussière de filtration compacté et traité thermiquement est amené à une installation de recyclage de matériau de friction pour réutilisation.

10. Procédé selon l'une des revendications 1 à 8, **caractérisé en ce que** le granulat de poussière de filtration ou l'agglomérat de poussière de filtration traité thermiquement est utilisé comme matière additionnelle pour des mélanges de matériau de friction.

11. Procédé selon l'une des revendications 1 à 8, **caractérisé en ce que** le granulat de poussière de filtration ou l'agglomérat de poussière de filtration traité thermiquement est utilisé comme mélange de matériau de friction avec addition de liants pour la production de garnitures de friction.
